(19) **Europäisches Patentamt**

**European Patent Office**

**Office européen des brevets**

(11) **EP 1 287 641 B1**

(12) **EUROPEAN PATENT SPECIFICATION**

(45) Date of publication and mention
of the grant of the patent:
**18.10.2006 Bulletin 2006/42**

(51) Int Cl.:
***H04L 9/32*** (2006.01)

(21) Application number: **01931964.9**

(22) Date of filing: **24.05.2001**

(86) International application number:
**PCT/GB2001/002365**

(87) International publication number:
**WO 2001/093497 (06.12.2001 Gazette 2001/49)**

(54) **A method of validating an encrypted message**

Verfahren zur Validierung einer Verschlüsselten Nachricht

Procédé de validation d'un message crypte

(84) Designated Contracting States:
**AT BE CH CY DE DK ES FI FR GB GR IE IT LI LU MC NL PT SE TR**

(30) Priority: **01.06.2000 GB 0013356**

(43) Date of publication of application:
**05.03.2003 Bulletin 2003/10**

(73) Proprietor: **TAO GROUP LIMITED
Earley,
Reading RG6 1AZ (GB)**

(72) Inventors:
• **GEIRINGER, Felix, Egmont**
Oxford OX4 1NZ (GB)
• **SHELTON, Daniel**
Reading RG1 3QA (GB)

(74) Representative: **Maggs, Michael Norman et al
Kilburn & Strode
20 Red Lion Street
London WC1R 4PJ (GB)**

(56) References cited:
**WO-A-98/08323**

• **MENEZES A ET AL.: "HANDBOOK OF APPLIED CRYPTOGRAPHY" 1997 , CRC PRESS LLC , BOCA RATON US XP002178202 Data integrity combined with encryption paragraph [9.6.5]**
• **SILVERMAN J H: "PLAINTEXT AWARENESS AND THE NTRU PKCS" NTRU CRYPTOSYSTEMS TECHNICAL REPORT #7, VERSION 1, 3 July 1998 (1998-07-03), pages 1-9, XP002178561**

**Description**

The present invention relates to a method of validating an encrypted message, particularly although not exclusively in conjunction with a public key cryptosystem.

The present invention, in its various aspects, may preferably be used in conjunction with a variation of the encryption and decryption algorithms disclosed in the NTRU PCT patent application WO 98/08323 ("the NTRU patent application"). However, it should be understood that none of the aspects of the invention set out below, or defined in the claims, are restricted to use in that specific context.

The invention, in its various aspects, further extends to a computer program for carrying out a method, as described below, a datastream representative of such a computer program, and to a physical carrier which carries such a computer program. The invention further extends to an apparatus and to a system which is adapted or configured for carrying out such a method.

According to an aspect of the invention there is provided a method of validating an encrypted message comprising:

(a) representing the message as a message polynomial;
(b) encrypting the message polynomial to form a cipher polynomial;
(c) hashing together inputs representative of the message polynomial and the cipher polynomial to create a hash output; and
(d) transmitting to a recipient both an encrypted message defined by the cipher polynomial and information based on the hash output.

The hash function inputs are preferably concatenated.

Preferably, the hash output is transmitted as plain text to the recipient in association with the encrypted message (for example, concatenated with it); alternatively, the hash output may be manipulated in some way before being sent (eg it could itself be encrypted, although this would not significantly improve security).

When the message is received, the recipient may confirm validation of the transmitted encrypted message by checking the hash output against a re-calculated output based on the received cipher polynomial and the decoded message polynomial. If the two outputs match, the decoded message can be accepted as correct. If they do not match, the decoded message should be rejected.

The cipher polynomial may be represented by a series of bits which are packed to fill bytes before transmission, and before input into the hash function. Likewise, the cipher polynomial may also be represented by a series of bits (preferably two bits per coefficient), and these may be similarly packed into bytes before being hashed.

The method is not restricted to polynomial-based cryptosystems, and extends more generally to a method of validating an encrypted message comprising:

(a) encrypting the messagetext to form a ciphertext;
(b) hashing together inputs representative of the messagetext and the ciphertext to create a hash output; and
(c) transmitting to a recipient both an encrypted message defined by the ciphertext, and information based on the hash output.

By hashing together the messagetext (plaintext message) and the ciphertext, and transmitting the hashed value to the recipient, it becomes virtually impossible for an attacker undetectably to modify either the messagetext or the ciphertext. If either is modified, the corresponding hash created by the recipient will fail to match, and the system then preferably rejects the message. To prevent this information being passed back to the attacker, the preferred system does not inform the sender of whether the received ciphertext was valid.

The plaintext message may, in the preferred embodiment, be a binary representation of a sequence of bytes, each byte being representative of an alphanumeric or other character in the message that needs to be transmitted securely.

Another prior art is considered to be Chapter 9 of the "Handbook of Cryptography", 1997 CRC Press LLC, Boca Ratou, US, by Menezes et al, disclosing computing a hash value over the message and also discussing computing a hash value over the cypher.

The invention may be carried into practice in a number of ways and one specific and preferred embodiment will now be described, by way of example, with reference to the accompanying drawings, in which:

Figure 1 illustrates the key creation system in Tumbler;
Figure 2 illustrates the encryption system;
Figure 3 illustrates the decryption system;

Figure 4 illustrates the error correction algorithms;
Figures 5, 6 and 7 illustrate the concept of a wrapping error;
Figure 8 illustrates the order in which coefficients are checked for possible errors;
Figure 9 illustrates a typical prior art pseudo random number generator (PRNG);
Figure 10 illustrates the PRNG within Tumbler;
Figure 11 illustrates a circuit diagram for addition modulo 3;
Figure 12 illustrates a circuit diagram for subtraction modulo 3; and
Figure 13 illustrates a circuit diagram for multiplication modulo 3.

## 1. Introduction

Tumbler™ is the brand name of the present applicant's cryptographic developers' toolkit. It contains a number of different cryptographic algorithms and non-algorithm-specific APIs, but is built primarily but not exclusively around the NTRU PKCS algorithm as developed by the NTRU Corporation. Details may be found in *Hoffstein, Pipher and Silverman, NTRU: A Ring-Based Public Key Cryptosystem, J P Buhler (ed), Lecture Notes in Computer Science 1423, Spring-Verlag, Berlin, 1998, 267-288;* and in PCT patent application WO98/08323 in the name of NTRU Cryptosystems, Inc. The latter document will be referred to throughout as "the NTRU patent application".

This algorithm represents a breakthrough in cryptography. Departing from the traditional world of 'Big Integer' based products, it provides more efficient and secure systems based on a polynomial mixing method. Any bare algorithm, however, is far from usable as a cryptographic product. In between a great deal of machinery is necessary. In the case of NTRU its unique style, which is the source of its superiority, means that much of this machinery must be reinvented to cope with the algorithms.

This document describes the unique implementation of the NTRU PKCS (Public Key Cryptosystem) contained within Tumbler. It outlines the problems that one faces in attempting to implement the NTRU PKCS as a real world cryptographic tool, and explains how Tumbler uses innovative techniques in order to solve these problems.

It should be understood that many of the innovative techniques used within Tumbler are independent of each other and could be used singly or in any selected combination. For example, although the following techniques are all contained within the preferred Tumbler embodiment, they could be used singly or in any combination: error correction, end of message marker, checking mechanism, large state pseudo random number generator, use of modulo arithmetic, and protection from multiple transmission attacks. It should also be understood that although Tumbler is primarily built around the NTRU PKCS algorithm, as set out in the NTRU patent application, most of the innovative techniques have a much wider application.

### 1.1 The Original NTRU PKCS Patent application

The NTRU patent application describes a method for the creation of two related polynomials, called the public key and the private key. It goes on to show how the public key can be used to transform a message, in the form of a polynomial, into an encrypted form. This encrypted message is secure, since the task of retrieving the original message, given the knowledge of the encrypted message and the public key only, is far too complex to be performed by current technology in a feasible length of time. The encrypted form could also provide the means of transferring (or storing) the message securely since knowledge of the private key usually allows recovery of the original message.

### 1.2 An Incomplete Solution

Using the private key and the encrypted form, the original message can usually be recovered. When the message cannot be recovered this is due to errors called wrapping or gap failures. It was originally believed that wrapping failures were easily recoverable with a given method and that gap failures occurred so rarely that they were discountable (NTRU patent application §1.3, p. 31). It became apparent, however, that the method suggested for fixing wrapping failure often failed to correct the error, and that gap failure was common enough to effect usability significantly. There was also the issue of error detection. Since the person attempting to decrypt the message did not usually possess the original, it was difficult for them to know whether the message had decrypted correctly or not.

In computing terms, an arbitrary data file is an arbitrary length string of binary digits. The cipher, as described in the original NTRU patent application, encrypts ternary polynomials of a fixed length. It is therefore necessary to provide a method which turns a data file into a sequence of fixed length ternary polynomials in such a way that the resulting sequence of polynomials can be turned back into the original data file.

During a cipher's normal use many people, known as attackers, constantly attempt to break it. Where NTRU PKCS is used, the task of retrieving the original message, given the knowledge of the encrypted message and the public key only, is far too complex to be performed by current technology in a feasible length of time. The solution for an attacker is to gain more information than just the encrypted message and the public key.

Depending on the way in which the cipher is used it may indeed be possible for the attacker to gain additional information useful for breaking the cipher. The quick answer is not to use the cipher in a way that allows this. In some instances, however, this can be too limiting for practical purposes. The two addressed below are situations where it is desirable to send exactly the same message multiple times, or where one wishes to set up an automated system that might be accessed by a potential attacker.

The NTRU patent application describes the theoretical algorithm for the cipher, but does not address how a real world machine would go about performing this algorithm. The theoretical algorithm contains relatively few steps and employs mathematics that modem computers are able to perform quickly, and so is naturally fast. The present applicants have, however, devised techniques to increase the speed of this algorithm dramatically.

### 1.3 The Tumbler Solution

Tumbler's implementation of the NTRU PKCS bridges the gap between the theoretical and the practical. It also contains a number of new techniques that build on the advances contained in NTRU and can even be used in other areas of cryptography, data signal processing and computing.

Below are detailed methods of detecting errors and correcting both wrapping and gap failure. In order for the cipher to be usable as a practical means of securing data one must be able to rely upon the integrity of the decrypted message. Using the original methods described in the NTRU patent application, together with the detection and correction system outlined below, this is finally believed to be the case.

A coherent 'bit to tert' conversion scheme works in conjunction with an original 'end of message marker' system to interface between standard computer data files and NTRU PKCS polynomials.

Tumbler contains processes that operate alongside the NTRU PKCS and which allow the user to send exactly the same message multiple times, or to use an automated system that might be accessed by a potential attacker, without ruining the cipher's security.

As well as analysing a full range of standard mathematical tools in order to find the optimum solution for processing the NTRU PKCS, the developers of Tumbler's NTRU PKCS implementation have created some seemingly anti-intuitive original methods which process much of the NTRU PKCS data at a vastly increased rate.

In order to facilitate commercial cryptography using the NTRU PKCS it is necessary to combine this internal algorithm with a great many mechanisms designed to protect the cipher's use against common attacks, to interface the cipher with regular digital data handling, and also to overcome problems inherent in the cipher. The present applicant believes that all of this has been achieved in Tumbler.

### 2. Mathematical Terminology

The NTRU cryptosystem, and the Tumbler version, depends on three integer parameters ($N,p,q$) and four sets ($L_f$, $L_g$, $L_\phi$, $L_m$) of polynomials of degree no greater than $N$-1 with integer coefficients. Note that p and q need not be prime, but it should be assumed that GCD($p,q$) = 1, and that $q$ will always be considerably larger than $p$. In the Tumbler implementation p is normally 3, and q is normally 64, 128 or 256 depending on the size of N. Other implementations could use other values.

One works within the ring of truncated integer polynomials $R = Z[X]/(X^N-1)$. An element $F \in R$ will be written as a polynomial or a vector,

$$F = \sum_{i=0}^{N-1} F_i x^i = [F_0, F_1, \ldots, F_{N-1}]$$

Addition and subtraction in $R$ works in precisely the same way as in normal polynomial arithmetic. Multiplication, however, requires reduction modulo ($X^N$-1).

The symbol * denotes multiplication in $R$. This *star multiplication* is given explicitly as a cyclic convolution product,

$$F * G = H$$

with

$$\mathbf{H}_k = \sum_{i=0}^{k} F_i G_{k-i} \sum_{i=k+1}^{N-1} F_i G_{N+k-i} = \sum_{i+j \equiv k \,(\mathrm{mod}\ N)} F_i G_j$$

It should be noted that this is precisely the same as usual polynomial multiplication except that the coefficients 'wrap around,' so that the coefficient of $X^N$ is combined with (added to) the constant coefficient, the coefficient of $X^{N+1}$ is combined with the coefficient of $X$, and so on.

In practice, one is usually interested in the value of a polynomial's coefficients modulo p or q. In effect many of the operations can be considered to be occurring in the rings $Z_p[X]/(X^N-1)$ or $Z_q[X]/(X^N-1)$, but it is desirable to consider the residue of a single polynomial reduced both modulo $p$ and $q$.

When one performs a multiplication modulo (say) q, the intention is to reduce the coefficients modulo $q$.

There are two useful rules to remember when reducing modulo an integer p:

- a (mod p) + b (mod $p$) = (a + b) (mod $p$),
- (c (mod $p$) $\times$ a (mod $p$)) (mod $p$) = (c $\times$ a) (mod $p$).

$R$ is not a field. However, the NTRU parameters have been chosen in such a way that it is extremely likely for appropriately selected polynomials to have inverses in $R$. $R$ is a unique factorisation domain so, if they exist, these inverses are unique.

$L_m$ consists of all polynomials in $R$ with coefficients modulo $p$. The elements of $L_f$, $L_g$ and $L_\phi$ also have coefficients modulo $p$, but are of a predefined weight. Polynomials in $L_g$ and $L_\phi$ are defined to have, respectively, precisely $d_g(N)$ and $d_\phi(N)$ coefficients with the value 1, $d_g(N)$ and $d_\phi(N)$ coefficients with the value -1, and the remaining coefficients all having the value 0. Polynomials in $L_f$ are defined to have $d_f(N)$ coefficients with the value 1, and $d_f(N)-1$ coefficients with the value -1, while all the rest of the coefficients have the value 0. The polynomials in $L_f$ have one fewer coefficient with value 1, to allow them to be invertable.

### 3. Overview

The Tumbler cryptosystem is formed of three separate systems: a key creation system, an encrypting system and a decrypting system. This section briefly examines each of these three systems and outlines how each is constructed from a number of underlying processes.

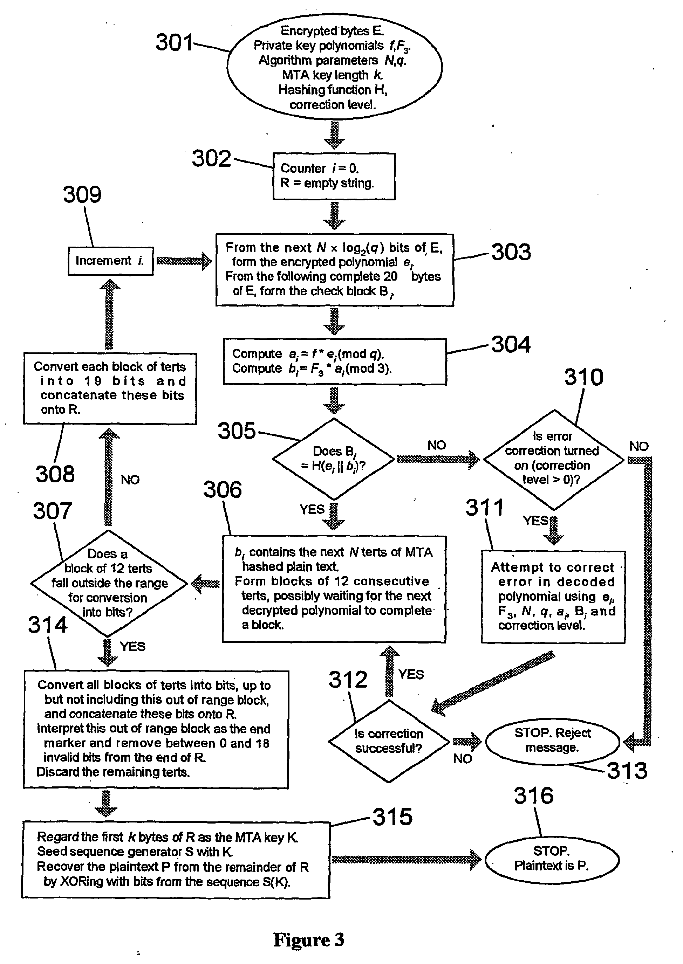

The NTRU patent application describes encoding and decoding as very simple two or three step processes. The Tumbler implementation has introduced many additional features, making these processes considerably more complicated. Each of the three processes below is described with the help of a flow diagram. It is interesting to compare these three flow diagrams with their equivalents from the NTRU patent application (figs.3, 4 & 5).

In the case of the key creation system, the process has remained relatively simple. It is, however, in the key creation that the greatest advances in efficiency have been achieved.

### 3.1 Key Creation

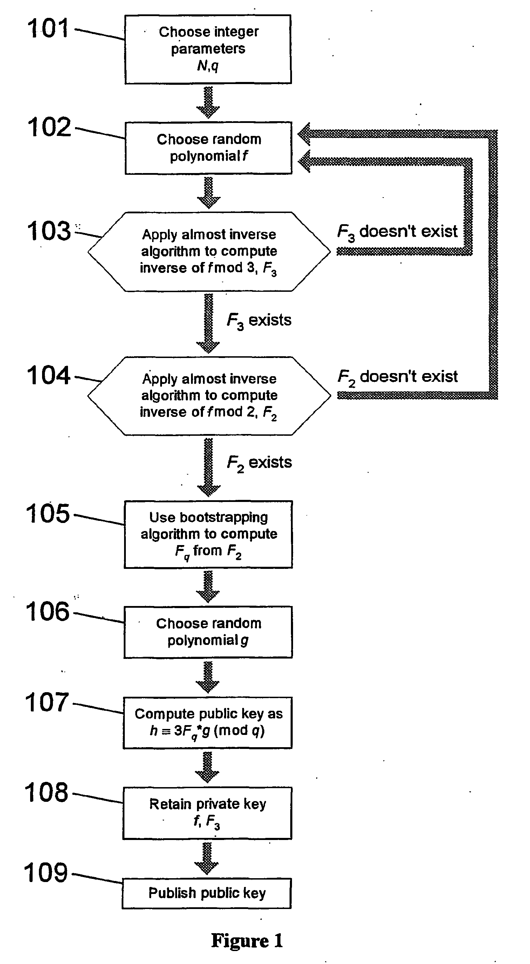

Here the key creation system is described, as it appears in figure 1(cf fig 3 of the NTRU patent application).

**101**. The key creation system takes in the algorithm parameters $N$ and $q$. The parameter $p$ used in the NTRU patent application is fixed to be 3. However, other values could be used.

**102**. The private key polynomial, $f$, is chosen randomly from the set $L_f$, which is dependent on $N$, as described in the NTRU patent application (§1.2, p.31).

103. The inverse of $f$ is calculated modulo 3. Instead of using the 'Euclidean Algorithm,' the more efficient 'Almost Inverse Algorithm' is used. This algorithm was found in the paper *'Fast Key Exchange with Elliptic Curve Systems'* by *Richard Schoeppel, et al (Advances in Cryptology - CRYPTO 95, Lecture Notes in Computer Science 973, ed D. Coppersmith, Springer-Verlag, New York; 1995, pp. 43-56)*. It is possible that the inverse does not exist. In this case, one returns to 102 and chooses a new $f$. In implementing this algorithm a process of fast modulo arithmetic through parallel bit operations on a vector representation is used (see §12 for further details).

**104.** As for **103,** except that the inverse of $f$ is calculated modulo 2. In implementing this algorithm a process of fast modulo arithmetic through parallel bit operations on a vector representation is used (see §12).

**105.** Given an inverse modulo a prime, it is possible to calculate from it the inverse modulo a power of that prime, using the well-known mathematical technique colloquially called bootstrapping. This allows us to calculate the inverse modulo $q$ (which is always a power of 2) from the inverse modulo 2. Bootstrapping uses the following principle. If F is the inverse off modulo a power of a prime $p^m$, then $2F - f^* F^2$ will be the inverse of $f$ modulo $p^{2m}$.

**106.** $g$ is chosen randomly, in a similar way to $f$, but from the set $L_g$

**107.** This is the same computation as is performed in the NTRU patent application (fig. 3, step 350) except that the factor $p$ (= 3) has been included for ease of use.

**108.** The private key is the pair $f$, $F_3$.

**109.** The public key $h$ may then be published. This has been calculated in step **107.**

### 3.2 Encryption

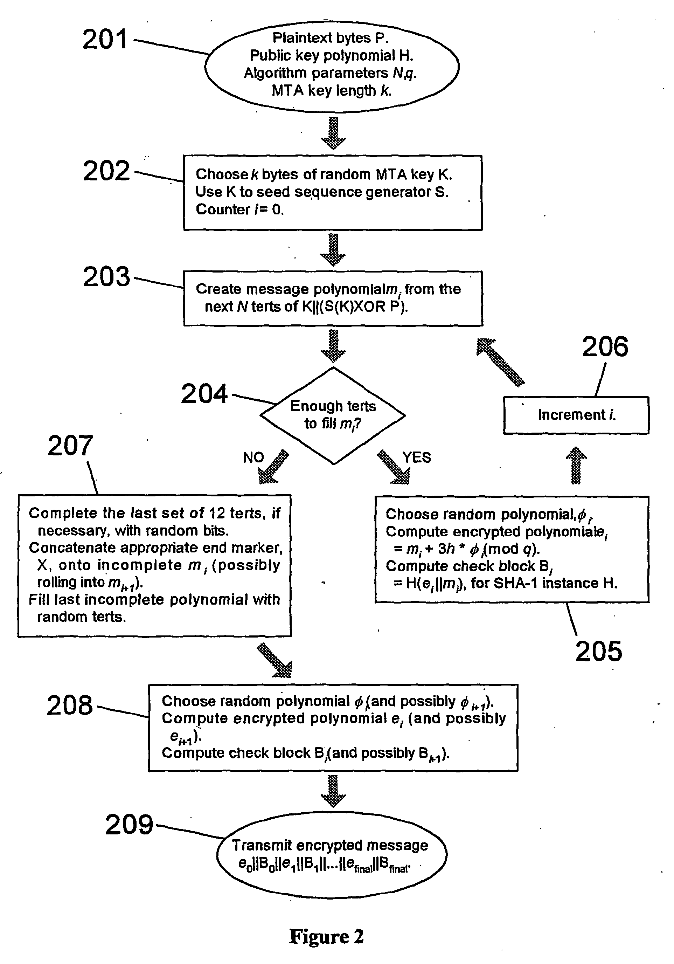

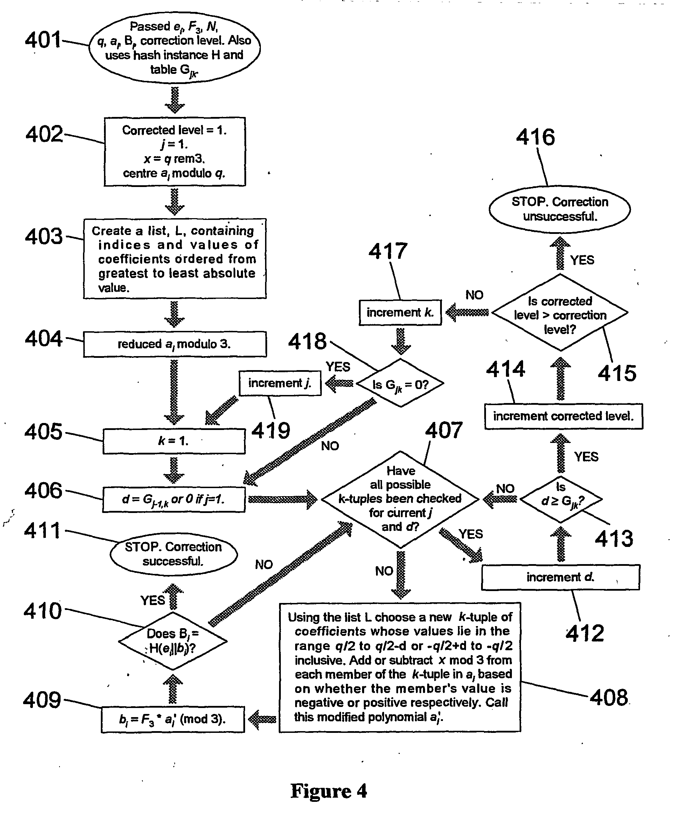

Here the Tumbler encryption system is described, as it appears in figure 2. This should be compared and contrasted with the original encryption system described in the NTRU patent application (fig. 4).

In figure 2, the symbol $\|$ is used to denote the concatenation of the objects to either side.

**201.** The encryption system takes in the original message data (the plaintext), P, as a (binary) string of bytes with an undefined length; the public key polynomial, h, the algorithm parameters $N$ and $q$; and, if necessary, a Multiple Transmission Attack protection key length (MTA key), $k$. The process also makes use of the SHA-1 hashing function, $H()$. SHA-1 is defmed in the US Government's National Institute of Standards and Technology's Secure Hash Standards (FIPS 180-1).

It will be understood, of course, that the plaintext P represents the actual alphanumeric (or other) message to be encrypted according to any convenient standard binary representation.

**202.** If the cipher requires Multiple Transmission Attack protection, this is applied to the plaintext before encoding (see § 7). For a non-zero $k$, $k$ bytes of random data (K) are generated, and these bytes are used to seed the sequence generator (see § 11). If no MTA protection is used then $k = 0$, K = Ø, but the sequence S(K) is logically considered to be all zeros. In practice a sequence of all zeros has no effect. This is not the same thing as S(Ø)!

**203.** The MTA key; K, forms the first $k$ bytes of plaintext for entry into the cipher (see § 7). This is then followed by the original bytes of plaintext data XORed with the output of the sequence generator (see § 11). To encode the XORed plaintext it is necessary to convert the binary data into ternary, in order to fill the ternary polynomials (m) that are used by the cipher (see § 8). These ternary digits, or "terts," form the message polynomials that are then processed by the PKCS cipher. If fewer than $N$ terts remain unprocessed then the remaining terts are placed in the next message polynomial and an end of message marker will be created in **207.**

**204.** Provided that enough terts remain unprocessed, a message polynomial is constructed from the next $N$ and then encrypted. If the plaintext data has been exhausted and there are insufficient terts to fill the next message polynomial, an end of message marker will be created in **207**.

**205.** A random polynomial is chosen and multiplied by the public key. The product polynomial is then added to the message polynomial. This process is identical to that described in the NTRU patent application (fig 4, step 450) except that the parameter $p$ has been incorporated into the public key. The resulting cipher polynomial is then packed to fill bytes and inputted into a check hash function, followed by the message polynomial using 2 bits per coefficient, which is also packed to fill bytes. The check hash is computed and concatenated to the end of the cipher polynomial (see § 6). The output from this hash forms check block $B_i$.

**206.** Having encrypted a message polynomial one then proceeds to the next polynomial using the next N terts of plaintext.

**207.** It is unlikely that the plaintext data will fill an exact number of message polynomials or even an exact multiple of 19 bits for conversion into terts. When all the polynomials that can be filled completely using the process described in **203, 204, 205 & 206** have been processed, the last message polynomial is completed using the end of message mechanism (see § 9). This mechanism creates a 12 tert end of message marker. This marker is included in the plaintext and may not fit in the last incomplete message polynomial. In this case the end of message marker will spill over into another message polynomial. The last polynomial is completed with random terts if necessary.

**208.** The last message polynomial (or possibly the last two message polynomials) containing the last incomplete plaintext message polynomial and the end of message marker are now encrypted in the same manner as all other message polynomials.

**209.** The concatenation of each encrypted polynomial packed to fill bytes, but with the last incomplete byte (if it exists) completed with zeros, followed immediately by its associated check block, forms the encrypted message (ciphertext).

**3.3 Decryption**

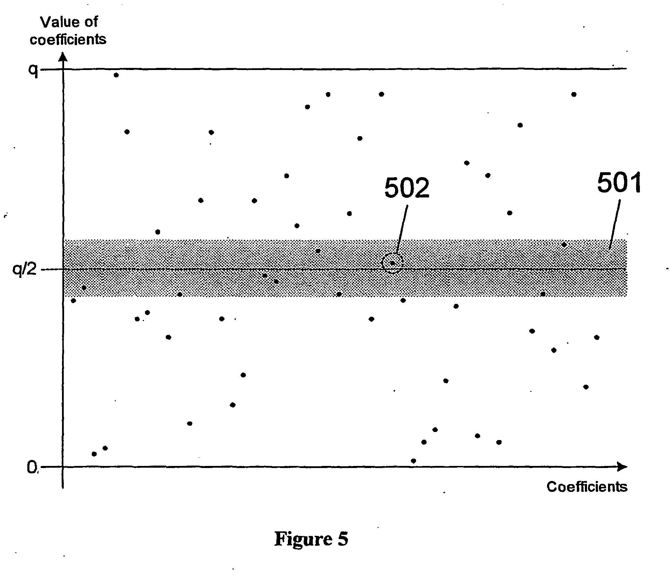

Here the Tumbler decryption system is described, as it appears in figure 3. It should be compared and contrasted with the original decryption system described in the NTRU patent application (fig. 5).

**301.** The decryption system takes in the algorithm parameters N and q, the ciphertext, E, the private key polynomials, $f$ and $F_3$, the error correction level, and, if necessary, the MTA key, $k$. The process also makes use of the SHA-1 hashing function, $H()$. In figure 3 the symbol ‖ is used to denote the concatenation of the objects to either side.

**302.** $i$ is a counter used to refer, in order, to specific encrypted polynomials. R will contain the decrypted plaintext data with the MTA protection still applied (see § 7).

**303.** Each encrypted polynomial and its related check block are reconstructed from the ciphertext by simply reversing the packing sequence used in 209.

**304.** The message is multiplied by the private key, and then by the private key inverse. This is identical to the process described in the NTRU patent application (fig. 5, steps 570 and 580), except that the result of the first multiplication is recorded in case it is needed for error correction.

**305.** A hash is made of $e_i$ and $b_i$, in the same way as that of $e_i$ and $m_i$ in **205** (see § 6), treating the decrypted polynomial $b_i$ as the message polynomial $m_i$. This hash is compared with the transmitted check block $B_i$. In the event that error correction needs to be employed on a polynomial, many such hashes may need to be calculated using the same $e_i$. It may therefore be efficient to record the state of the hash function after the input of $e_i$, but before the input of $b_i$.

**306**. If the transmitted check block matches the hash created in **305** then the decoded polynomial, $b_i$, is accepted as the original $i^{th}$ message polynomial. The terts of these message polynomials need to be converted back into bits (see § 8). This conversion is performed in sets of 12 terts.

**307.** The bit to tert conversion converts sets of 19 bits into a subset of the possible sets of 12 terts. When a set of 12 terts is a member of this subset it is passed for conversion back into bits; otherwise it is not a converted set of 19 bits but an end of message marker (see § 9).

**308.** The terts are converted into bits (see § 8) and the result is concatenated to R. R is of course a binary string (representing a sequence of bytes).

**309**. Having decoded the previous polynomial the decryption system then proceeds to the next encrypted polynomial.

**310**. If the transmitted check block does not match the hash created in 305 then the decoded polynomial, $b_i$, is not the original $i^{th}$ message polynomial.

**311**. If the optional error correction is active the error correction system attempts to recover the original message polynomial (see § 5).

**312.** The error correction system will report back its success. If it is successful then the resulting $b_i$ (a different $b_i$ from that calculated in **304**) is accepted as the next message polynomial, and the cipher continues as normal.

**313.** This point is reached if an error has occurred and has not been corrected. The original plaintext cannot therefore be recovered. In most cases the whole message is discarded at this stage. This is because most uses of a PKCS require the whole intact message. It is possible, however, simply to record which bytes of the resulting plaintext relate to the current incorrect message polynomial, skip to stage 306, and continue as normal. Only those plaintext bits directly converted from the inaccurate message polynomial will be affected.

**314.** An out of range set of 12 terts indicates an end of message marker. All previous blocks of terts are converted to bits and concatenated to R. Finally this block is interpreted using the end of message mechanism (see § 9). This may require the removal of some of the bits contained in R. Terts that have not yet been converted are discarded.

**315.** At this stage R is the plaintext data with the MTA protection still applied. The first $k$ bytes form the MTA key K. These are used to seed a sequence generator S(K). If no MTA protection is used then $k = 0$, K $= \varnothing$, but the sequence S(K) is logically considered to be all zeros. In practice a sequence of all zeros has no effect. This is not the same thing as S($\varnothing$)! The output from S(K) is XORed with R to produce P (see § 7).

**316.** The recovered plaintext data is the binary string P, representing the bytes of the actual message.

**4. Decoding Failure**

Each time a cipher polynomial is decoded using the NTRU algorithm there is a small probability that it will fail to decode back to the original message polynomial.

To decrypt the cipher polynomial e using the private key $f$, one first computes

$$a \equiv f * e \,(\mathrm{mod}\ q),$$

choosing the coefficients of *a* in the interval from -*q*/2+1 to *q*/2. Treating *a* as a polynomial with integer coefficients, the message polynomial can usually be recovered by computing

$$F_p * a (\mathrm{mod}\ p),$$

where $F_p$ is the inverse offmodulo *p* ($F_p * f = 1$ (mod *p*)).

The polynomial *a* satisfies

$$
\begin{aligned}
a &\equiv f * e \equiv f * \phi * h + f * m\,(\mathrm{mod}\ q) \\
&= f * p\phi * F_q * g + f * m\,(\mathrm{mod}\ q) \\
&= p\phi * g + f * m\,(\mathrm{mod}\ q)
\end{aligned}
$$

Consider this last polynomial $p\phi * g + f * m$. For appropriate parameter choices, it is possible to ensure that in almost every case all its coefficients lie between -*q*/2+1 and *q*/2, so that it does not change when its coefficients are reduced modulo *q*. This means that reducing the coefficients of $f * e$ modulo *q* into the interval from -*q*/2+1 to *q*/2, recovers *exactly* the polynomial

$$a = p\phi * g + f * m.$$

'Appropriate parameter choices' refers primarily to the values $d_g(N)$, $d_\phi(N)$ and $d_f(N)$, defined in § 2. The lower these values are, the greater the proportion of coefficients in the polynomials *g*, $\phi$ and *f* are zero. As a consequence of this, the probability that a coefficient in the above polynomial will be close to zero becomes greater. However, these values also dictate how many possible polynomials there are of each type, and therefore how effective the cipher's security is. If these values are large enough, there will be too many possible values of *g*, $\phi$ and *f* for an attacker to be able to guess their exact value in a feasible amount of time. If these values are so small that there is no chance that any of the coefficients in the above polynomial will lie outside the range -*q*/2+1 to *q*/2, then the security of the cipher will be compromised.

The parameter choices used in Tumbler give a probability of approximately 1 in 10000 that the polynomial

$$p\phi * g + f * m$$

will have a coefficient that lies outside the range -*q*/2+1 to *q*/2. This means that the value of some coefficient(s) will be translated by $\pm q$ during the first step in decoding and will therefore have an altered value modulo 3.

### Example

Figures 5, 6 and 7 give a visual example of a wrapping error.

Figure 5 graphs an example polynomial $f * e$ that has been reduced to the least positive residues modulo q. Fifty coefficients are represented by dots placed at heights relative to their value (between 0 and q). This is the polynomial that the decoder will recover halfway through the decoding process. The polynomial is displayed using the least positive residue classes, as the simplest reduction modulo a power of 2 in a computer will leave numbers in these classes. In order to recover the message the polynomial must be shifted into the least absolute residue classes (between -q/2 + 1 and q/2). However the current form of the polynomial has the advantage that all the coefficients that are most likely to wrap incorrectly are collected together in the centre of the polynomial. This zone is highlighted on the graph (the area marked as **501**).

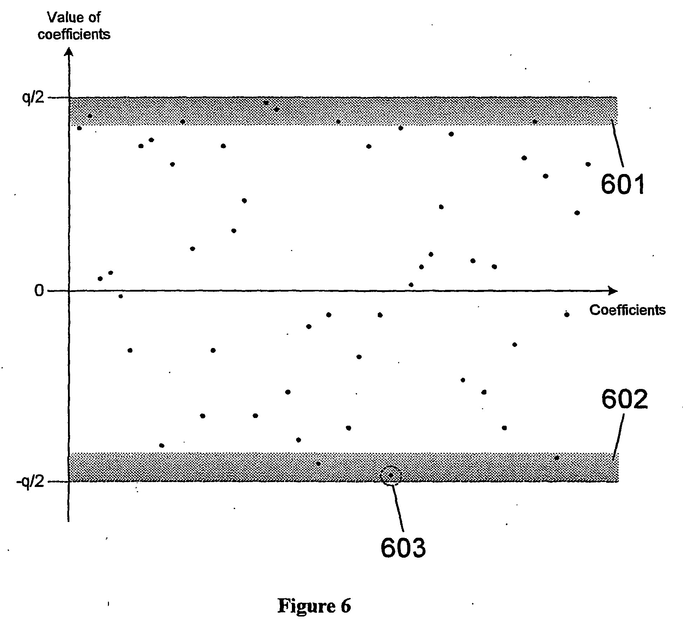

Figure 6 shows the same polynomial as in figure 5 except that it has now been shifted into the least absolute residue classes modulo $q$. The area that was marked as **501** in figure 5 has now been split into two and is marked as **601** and **602.** The coefficient that was marked as **502** in figure 5 was just above the $q/2$ line and has therefore been shifted down by $q$ and now sits at the bottom of the graph (marked as **603**). This is the form of the polynomial that will be convoluted with $F_3$ in order to recover the original message polynomial.

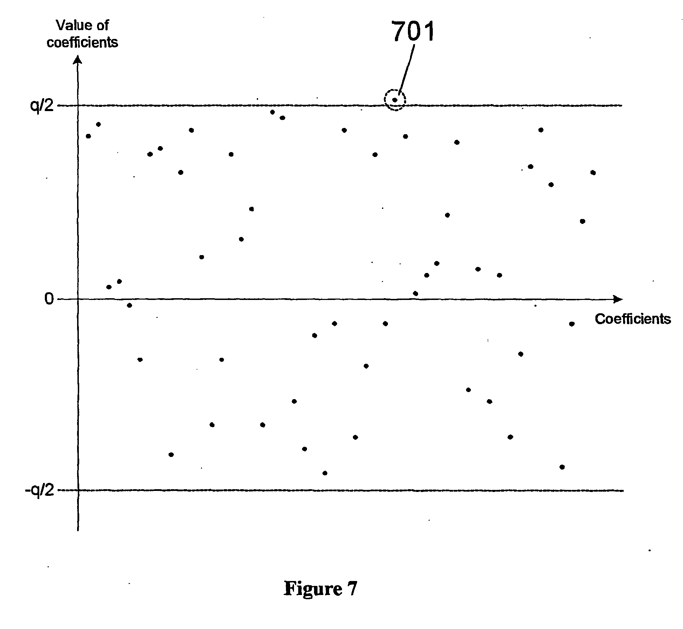

Figure 7 graphs the polynomial $p\phi * g + f * m,$ relating to the polynomials graphed in 5 and 6. This polynomial is not reduced modulo $q$, but it is hoped that its coefficients will all lie in within the range $-q/2+1$ to $q/2$ so that the polynomial from figure 6 will be an exact match. If so, then the message will be recovered without error. This will happen, with appropriate parameter choices, in all but a very small fraction of cases. In this example the coefficient marked as **701** lies outside the stated range. This means that the polynomial $f * e$ that was shown in figure 6, while equivalent to this polynomial modulo $q$, is not the same and not equivalent modulo 3. The coefficient **701** has been wrapped to the position marked **603** in figure 6.

It is important that there exists some means by which it is possible to know whether or not an error has occurred. The polynomial $\phi$ is known only to the encrypter, while the polynomials $g$ and $f$ are known only to the decoder, so it is impossible to predict whether a wrapping failure will occur. Detecting failure involves the use of some sort of a check hash that confirms the integrity of the original data during the encryption/decryption process. Such a check is also necessary to prevent some forms of attack.

The mechanism employed by Tumbler to detect decoding failure is detailed in § 6, and the means of correcting these errors follows in § 5.

## 3. <u>Error correction</u>

Wrapping errors were a recognised problem at the time that the NTRU cipher was proposed (NTRU patent application, §1.3, p. 31). However, the routine suggested for resolving this was flawed, and did not correct many instances of wrapping failure. The method involved shifting the polynomial $a$ from above, by a multiple of 3. This changed the value of the coefficient that was being incorrectly wrapped so that it was not wrapped, and did not alter the value of any of the coefficients when they were reduced modulo 3. Unfortunately, this often caused a coefficient, whose value lay at the other end of the range, to be wrapped incorrectly, where previously this would not have occurred.

The wrapping error correction that was suggested also failed to correct an error known as gap failure. This occurs when an incorrectly wrapped coefficient has a value that is at least as close to zero as a correctly wrapped coefficient of the same sign. This was not originally considered an issue, as these failures were thought to be extremely rare. A gap failure can actually occur once in every ten million polynomials, which is sufficiently often to be noticed by many applications.

The principle behind Tumbler's error correction system is simple. If there is an error then find it and correct it.

The difficulty is that there are N coefficients which, viewed naively, could be wrong in two possible ways (when treated as modulo 3 values). There could also be multiple simultaneous errors. Checking every possible error is therefore equivalent to trying out every possible ternary polynomial until one works. Due to the nature of the cipher this would take an unfeasible amount of time. Furthermore, the error may not even have been caused by decoding failure, but by an error in transmission or a deliberate alteration by an attacker.

The Tumbler solution is based on the fact that not all possible errors are bom equal. If one orders the possible causes of error from most likely to least likely then an extremely efficient search can be performed for the cause of the error. In practice the most common cause of a decoding failure will be the cause approximately 9999 errors in 10000 (for the parameter choices currently used in Tumbler).

Recalling the cause of decoding failure in § 4, the algorithm parameters have been chosen so that a certain polynomial's coefficients are almost always inside the range $-q/2+1$ to $q/2$. When they are not within the range a decoding failure is said to have occurred. The chance of a coefficient falling outside this range is, in practice, about 1 in 10000 per polynomial. The chance of two coefficients falling outside this range simultaneously is less than 1 in 100000000 per polynomial, and so on for more simultaneous errors. Also, when a coefficient falls outside this range it will almost always fall outside by only a small amount. The greater the distance, the less likely it is that a coefficient will fall at that distance outside the range.

Furthermore, when a coefficient falls just above this range it will be wrapped to the bottom of the range. When a coefficient falls just below this range it will be wrapped to the top. In the first case its value will be q too small, which means that it will be $x$ too small modulo 3 where $x$ is the smallest positive residue of $q$ modulo 3. In the latter case it will be $x$ too large.

This provides a simple means of finding the error. The values that lie closest to the top and bottom of the range $-q/2+1$ to $q/2$ are checked, and attempts are made to correct their values modulo 3 by adding or subtracting $x$ (depending on whether the values are at the bottom or top of the range respectively).

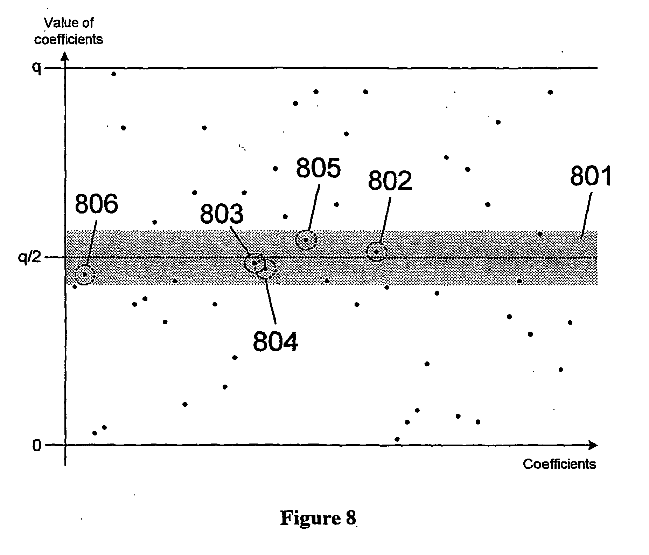

Figure 8 shows the same graph as that in figure 5 (explained in § 4). The area surrounding the line $q/2$ is highlighted and marked as 801. The coefficients that lie within this area are the ones that are most likely to cause an error. In order of their proximity to the line $q/2$ the first 5 coefficients are labelled 802, 803, 804, 805 and 806. The most likely cause of an error would be the coefficient marked 802 having a value that is $x$ too small. This is exactly the error that was described in the example in § 4, and adding $x$ to this coefficient's value would indeed correct the error.

The exact method that one should employ to correct these errors depends heavily on the use to which the cipher is being put, and the platform upon which it is being implemented. An example algorithm is given below. The premise of this method is that efficiency can be achieved by making multiple correction attempts as fast as possible. However, 9999 out of 10000 errors will be corrected on the first attempt. It is probably best, in terms of speed, to check in the shortest possible time for the most likely error and only do the work necessary for continuing the search if that first attempt fails.

Since the errors are only occurring in the order of once in every 10000 polynomials the speed difference will be small on average and will only be important when constant flow speed is an issue. The method described here does have some advantages. Given appropriate G tables (see below), it will fix all decoding errors in a reasonable time. After the first few steps the original data can be stored in a very efficient format, and the original modulo q data need never be referred to again.

Figure 4 is a flowchart of the following error correction algorithm. No equivalent algorithm was presented in the NTRU patent application. This flowchart is designed as a counterpart to the flowchart describing the decoding system (see figure 3).

**401**. The error correction routine uses the algorithm parameters $N$ and $q$. It also uses the private key inverse, $F_3$, but not the private key itself.

The correction level determines how far the error correction routine should continue. The error correction must be non-zero, or the error correction routine would never have been called in the first place. Almost all errors are fixed very rapidly. The correction level allows one to control how certain one can be that an error is due to a cause other than decode failure. An arbitrarily high correction level, when the cause of the error is in transmission, would cause the process to continue for an arbitrarily long time. Any existing errors are extremely likely to be corrected in the first few attempts. It is therefore possible to conclude very quickly that the chance of a yet undetected error is negligible and that the failure of the polynomial to decode is more likely to be caused by a problem that occurred during the transmission of the message.

The correction routine takes in the half-decoded mod $q$ polynomial $a_i$, and the cipher polynomial $e_i$. These relate to the polynomials used by the decoding system (see figure 3). $e_i$ is only used for creating the check block. It is possible to avoid repeatedly inputting $e_i$ into the hash instance by recording the state of the hash function after inputting $e_i$ and then returning to this state, instead of a new hash instance, when a new check is required.

The table $G_{jk}$ is constructed from experimentation and allows one to control the order in which varying numbers of concurrent errors are corrected at various depths. Since almost all errors are corrected immediately it is hard to determine ideal values for this table beyond the first couple of entries. *Ipso facto* the exact values are of little importance.

**402.** The corrected level is simply a counter used to compare with the correction level.

The value $j$ is used in conjunction with the table G. It tells us which row of G is currently being used.

The value of $x$ tells one how much a value, incorrectly wrapped modulo $q$, has been altered modulo 3. More generally, if the value ofp from the NTRU patent application is chosen to be something other than 3, then $x$ will be calculated as $x = q \ rem \ p$.

Centring a polynomial modulo q refers to shifting it into the least absolute residue classes (centred around zero). It should be noted that it is not necessary to use the range $-q/2+1$ to $q/2$. Instead one could use the range $-q/2$ to $q/2-1$.

**403**. At this point a list is created which will order the coefficients of $a_i$ by the proximity of their values to $-q/2$ and $q/2$. If values exactly equal to $q/2$ were wrapped down in step **402**, then negative valued coefficients should be listed before positive valued coefficients with the same absolute value, and vice versa if values exactly equal to $-q/2$ were wrapped up. In the example described in figure 8, the list would begin with the coefficients labelled **802, 803, 804, 805** and **806** in that order. It is possible to record only the distance of each coefficient's value from the edge of the range and not the value itself. The whole value is used here as it makes it easier to follow the process.

**404**. After being reduced modulo 3, the original modulo $q$ polynomial $a_i$ is no longer used.

**405**. $k$ is initialised. This will control the number of simultaneous errors for which a check is made. To begin with a check is made for one incorrectly wrapped coefficient.

**406**. Here one takes the current depth at which checks should be made from the table. If one is on the first row of the table the checking procedure should start at depth 0. It should be noted that if a value is no larger than the one for the previous $j$ then there are no unchecked $k$-tuples in **407,** and the algorithm will skip straight to the next value of $k$.

**407.** The algorithm searches through all the $k$-tuples of coefficients with values that are no more than a certain distance away from $\pm q/2$. At this point it is determined whether there are any $k$-tuples left that have not yet been checked. A $k$-tuple that has been checked during a search at a smaller depth need not be rechecked.

**408.** A $k$-tuple of coefficients, whose values all lie within the given range, is chosen. This $k$-tuple should be distinct from any $k$-tuple that has been chosen at a previous iteration of the algorithm. The values of the chosen $k$-tuple are then altered to compensate modulo 3 for a possible mis-wrapping modulo q.

**409.** Using the altered $a_i'$, the decoding process is completed.

**410**. A check is made to see whether the decoded polynomial and the cipher polynomial pass the integrity check.

**411.** If the integrity test passed then $b_i$ is accepted as the next decrypted polynomial.

**412.** The possible $k$-tuples having been exhausted, the search is now extended to a greater possible distance from $\pm q/2$.

**413.** The value of the table G at $(j, k)$ gives the depth at which one should stop searching for an error in a $k$-tuple for the current value of $k$.

**414.** The counter that records how far has been searched, in relation to the intended extent of the search, is incremented. There are obviously more economical means of achieving this than having a dedicated counter.

**415.** At this point a check is made to see if the corrected level has yet reached the supplied correction level.

**416.** If checking has been performed as far as the correction level specified without having stopped at stage **411** with the decoded polynomial, then the search is abandoned and the polynomial remains uncorrected. Realistically, with a minimum correction level this will still only occur when the error is caused by something other than decoding failure.

**417.** One increases the number of simultaneous errors for which the correction procedure is to be performed.

**418.** The rows of G are zero terminated. When an end is reached, $k$ is reset, and the search is begun for a singleton error again.

**419.** The algorithm moves to the next row of G.

The following example shows in more detail how the table G is used.

**Example**

$$a_i = 45 - 117x - 127x^2 - 45x^3 - 117x^4.$$

$$q/2 = 128$$

| index | value | sign |
|-------|-------|------|
| 0 | 45 | + |
| 1 | 117 | - |
| 2 | 127 | - |
| 3 | 45 | - |
| 4 | 117 | - |

Index 2 corresponds to the coefficient with the greatest absolute value. The coefficients with indices 1 and 4 have the same absolute value and the same sign, so it is completely arbitrary which of these two is listed first. For the rest of the example 1 will be listed first. Indices 0 and 3 have the same absolute value and different signs, so, assuming that one uses the range -127 to 128, 3 is listed first.

The resulting ordering will therefore be {(2,-127), (1,-117), (4,-117), (3,-45), (0,45)}.

$$q = 128 = 3 * 42 + 2. \text{ Therefore } x = 2.$$

Consider the simplified table $G_{jk}$ =

|       | $k=1$ | $k=2$ | $k=3$ | $k=4$ |
|-------|-------|-------|-------|-------|
| $j=1$ | 3 | 2 | 0 | 0 |
| $j=2$ | 11 | 11 | 4 | 0 |
| $j=3$ | 11 | 11 | 5 | 0 |
| $j=4$ | 15 | 12 | 11 | 1 |

This table indicates the best order in which to check for errors. If at any stage the error is discovered and corrected, then the checking procedure will be stopped.

The procedure starts with an attempt to correct the singleton errors that are equal to -128 or 128. There are none, so it proceeds to singletons in the ranges -128 to-127 or 127 to 128. These ranges contain one such, as pointed to by the first index in the sample ordering, i.e. 2. Since this coefficient is negative the algorithm attempts to correct it by adding 2. For the purposes of this example it shall be assumed that this fails.

Since G(1,1) = 3, one should continue trying to correct singletons until one has tried all singletons in the ranges -128 to -126 or 126 to 128. There are no more singletons in that range.

At this point it is better to try to correct a pair. However there are no pairs in the largest range specified by G (1,2) = 2. G(1,3) = 0, and therefore one must now switch to the next row of G and start searching for a singleton error once more.

The search starts where it left off in the previous row, with a depth of 3, and looks for singletons down the list up to a depth of 10. At 10 two more potential errors are found. Once more it shall be assumed that correcting these errors fails.

Now another attempt is made to correct for a pair of errors, starting where the search left off, at a depth of 4. When a depth of 10 is reached three coefficients are found in that range, and therefore 3 potential pairs. Because index 2 is first in the list these pairs would be corrected in the following order: (2,1), (2,4) and finally (1,4).

For this example it shall be assumed that one of these pairs was indeed the cause of the error. However, it is important to remember that in practice an error will almost always be corrected in the first few attempts.

## 6. Text Awareness

If a cryptosystem is able to determine whether the encrypted data is a valid encoding of its associated plaintext, it is then said to be plaintext aware. This is usually achieved with some sort of check hash.

Depending on their use, systems that are not plaintext aware may be susceptible to attack. An attack that takes advantage of a system's lack of awareness works in the following way:

An attacker intercepts an encoded message. The attacker then modifies the encoded message slightly before sending it on to the original intended recipient.

This slight modification may sometimes turn the message into an invalid ciphertext, i.e. one that could not be an encoded form of any plaintext. In such cases the decoder is unable to decrypt the message, and will generally inform the sender (who is the attacker in this scenario) that the message failed to decode.

Alternatively, the modified message might be a valid ciphertext. In such a case the decoder will decode the message and attempt to interpret it. Since it has been modified whilst encoded, the decoder may not be able to make any sense of the message, but this is irrelevant to the attack.

The attacker repeats this process several times, recording at each stage which modifications yield valid ciphertexts. By analysing this, the attacker is able to determine some of the original message.

Tumbler takes this approach further and automatically creates a regular hash check based on both the plaintext and on the ciphertext. This allows us to describe Tumbler, generally, as 'text aware'.

Tumbler preferably uses the SHA-1 (Secure Hash Algorithm 1) to compute a check hash for each encoded polynomial. SHA-1 is defined in the US Government's *National Institute of Standards and Technology's Secure Hash Standard (FIPS 180-1).*

As each message polynomial is encoded, both the original message polynomial and the resultant cipher polynomial are used as input into an instance of the SHA-1 algorithm.

During encoding, the cipher polynomial is taken as input first, as this speeds up the decoding process in the event of a decoding error. The cipher polynomial is first packed to fill bytes as described below, for transmission. The bits required to represent the first coefficient are placed in the least significant end of the first byte, and so on, and the last byte finished with unset bits if necessary.

The message polynomial is then packed to fill bytes, each coefficient this time being represented by two bits. Both bits are unset if the corresponding coefficient is zero; the first bit is set and the second is unset if the corresponding coefficient is -1; and both bits are set if the corresponding coefficient is 1. It is never the case that the second bit is set while the first is unset.

The packed cipher and message polynomials are concatenated, and are then hashed together using the SHA-1 algorithm. The hashed output is then transmitted to the recipient (unencrypted) along with the ciphertext. Typically, the addition of the hash will add around 20 bytes to the amount of text to be transmitted. Fewer additional bytes could be used, but this would result in lower security.

**Example**

The message polynomial {-1,0,1,1} would be encoded as the byte 10001111.

The last byte is finished with unset bits if necessary. In this encoded form the polynomial is concatenated to the end of the packed ciphertext, and hashed for transmission to the recipient.

During decoding, the ciphertext and the decoded message polynomial are concatenated and are inputted into the SHA-1. The output from the SHA-1 is then compared with the original hash computed during the encode process, and received along with the ciphertext.

If an attacker modifies an encoded message therefore, even if the modified data can be decoded, it is still computationally infeasible for the hash of the decoded message to match the hash of the original message. This makes it essentially impossible to alter the ciphertext and still pass this test.

The system then rejects all messages whose hash fails to match the original, whilst being careful not to inform the sender of whether the ciphertext was valid.

It is possible that wrapping failure may have caused the fault in the decoded message polynomial. If error correction is switched on, the cipher will attempt to correct the fault by using the algorithm described above. At each stage it will be necessary to re-compute the check hash to see whether the error has been rectified. Since the ciphertext remains the same and only the retrieved message polynomial differs for each check, it is possible to input the ciphertext into the hash only once and input the message polynomial each time.

The general method of hashing the ciphertext and the plaintext together to produce an integrity test for both is not NTRU dependent, but works equally well for other ciphers.

7. **Multiple Transmissions**

Tumbler includes the option of adding protection against Multiple Transmission Attacks (MTAs).

Should the same message be encrypted and transmitted more than once using the same public key and without MTA protection, it may then become susceptible to attack.

It is important to be aware of the possibility of predictable similarity between two messages. Most obviously identifiable are message headers, such as those used in email, which are often predictable. If the first few bytes of several messages are identical then their first message polynomials will also be identical and hence susceptible to a MTA:

Suppose that a list of prices is transmitted on a regular basis. If the attacker makes the correct assumption that the prices have not changed, this would also allow them to employ a MTA.

The security of a single message polynomial is dependent on the random factor used in the encryption of that polynomial. If an attacker is able to determine the random factor and has access to the public key, it is then trivial for them to retrieve the original message.

Each time a message is sent, the random factor is determined 'on the fly' for each polynomial. This means that if exactly the same message is sent more than once it will contain a different random factor. If an attacker knows for certain that two or more intercepted messages have exactly the same plaintext, they can compare these messages in an effort to determine the random factors used.

Even without MTA protection it is not generally possible to determine the entirety of the random factors from just two copies. However, even sending two copies might significantly compromise the security of the message, while sending multiple copies can allow the attacker to determine most (and eventually all) of the message.

The Tumbler MTA protection system employs a simple stream cipher together with a randomly selected key (eg using a pseudo-random number generator) to ensure that the plaintext message differs randomly from any other identical message sent with the same key. The stream cipher does not directly add to the security of the message as it is broadcast with its key, and thus need not be a particularly secure cipher. It must only ensure that two identical plaintexts will differ from one another in an unpredictable manner.

Encoding with the Tumbler MTA protection option adds a random (or pseudo-random) MTA key to the start of the plaintext. This key is then used to set the initial state of the Tumbler Sequence Generator (see § 11, and step **202** in figure 2). Subsequent bytes of plaintext data are then XORed with output from the Sequence Generator before being inputted into the PKCS cipher: see step **203** of figure 2.

During decoding, (figure 3), the first $k$ bytes of data returned from the PKCS cipher are used to set the initial state of the Sequence Generator (see § 11). Subsequent bytes are XORed with output from the Sequence Generator before being outputted as the decoded plaintext: see step 315 of figure 3.

8. **Bits to Terts**

Whereas data is conventionally stored as bits, the preferred PKCS algorithm handles messages as polynomials whose coefficients can take the values 0, 1 or -1. The message polynomial is just a string of ternary digits (terts). A method is required for converting the bits into terts and back again.

Each complete set of 19 bits of the message is converted in the present invention to 12 terts. This gives a packing efficiency of 98.65%, while allowing the arithmetic operations used in conversion to be performed using 32 bit integers. A method using integers of more than 64 bits would be more efficient, but would offer a gain in packing efficiency that would be negligible when compared with other packing issues.

**8.1 Conversion of bits to terts**

$x$ should be taken to be the integer whose least significant 19 bits are set in the same configuration as the block of 19 bits from the message, and whose other bits are all set to zero. Here terts should be assumed to be integers taking the value 0,1 or -1.

1. $x$ is divided by 3 and the remainder calculated. This value can then be used to determine the next tert. 0 determines that the value of the tert is 0, 1 determines that the value of the tert is 1 and 2 determines that the value of the tert is -1.

2. $x$ is divided by 3, discarding any remainder.

3. Perform steps 1 and 2 a total of twelve times.

Clearly, this process could be accelerated if in step 1 $x$ was divided by 81 instead of 3, and the remainder then used with a table of the 81 possible 4-tuples (ordered sets with four elements) of terts to determine the values of the next four terts. $x$ would then be divided by 81 in step 2. If this approach were used, the process would only require three iterations instead of 12.

Even greater speed could be achieved by a method that divided $x$ by 729, taking the remainder, before using a table of 729 possible 6-tuples of terts to determine the values of the next six terts, and then dividing $x$ by 729. This option would require only one remainder and one division operation. However, each method offering such an improvement in speed would also suffer from a corresponding increase in code size. The ultimate method in terms of speed would use a straight lookup on a table of all 531441 possible 12-tuples.

Whichever of the above methods is used, the conversion process gives values in the range {0,0,0,0,0,0,0,0,0,0,0,0} to {-1,0,0,-1,1,0,-1,-1,1,-1,-1,-1}. Thus, not all possible 12-tuples of terts can be generated. This is because $3^{12} = 531441$ is greater than $2^{19} = 524288$. This is important as sets of terts that lie outside this range are used to signify the end of the message.

The last incomplete set of 19 bits, if any, is padded out to 19 bits with the required number of random bits. The length of the real message data, excluding the padding, is remembered and used for determining the value of the end of message marker. See § 9 for further details on this.

**Example**

For the purposes of this example, it should be assumed that the sequence of 19 bits is 0101101101001100010, ordered from the first and least significant bit to the last and most significant bit. Regarded as a decimal integer, this sequence of bits is 144090. The value of each tert can be calculated as follows:

| Number of tert | Remainder when x is divided by 3 | New value of x after division by 3 (discarding remainder) | Value of tert |
|---|---|---|---|
| 0 | 0 | 144090 ÷ 3 = 48030 | 0 |
| 1 | 0 | 48030 ÷ 3 = 16010 | 0 |
| 2 | 2 | 16010 ÷ 3 = 5336 | -1 |
| 3 | 2 | 5336 ÷ 3 = 1778 | -1 |
| 4 | 2 | 1778 ÷ 3 = 592 | -1 |
| 5 | 1 | 592 ÷ 3 = 197 | 1 |
| 6 | 2 | 197 ÷ 3 = 65 | -1 |
| 7 | 2 | 65 ÷ 3 = 21 | -1 |
| 8 | 0 | 21÷3=7 | 0 |
| 9 | 1 | 7÷3=2 | 1 |
| 10 | 2 | 2÷3=0 | -1 |
| 11 | 0 | 0÷3=0 | 0 |

Therefore the bit sequence 0101101101001100010 will be converted into the tert sequence {0,0,-1,-1,-1,1,-1,-1,0,1,-1,0}.

**8.2 Conversion of terts to bits**

When the data has been decoded it will again take the form of a ternary polynomial, and the bit to tert conversion process will need to be reversed in the following manner:

1. $y$ should be taken to be the value of $x$ calculated from the previous set of 12 terts. This is clearly not relevant for the first block, for which there is no previous set. $x$ should be set to 0 initially.

2. The terts in the set should be numbered sequentially from 0 to 11. If the $i$th tert is 0 add 0 to $x$, if it is 1 add $3^i$ to $x$, and if it is -1 add $2 \times 3^i$ to $x$.

3. If $x$ has no more than 19 significant bits (and is therefore less than $2^{19}$), then the first 19 bits of $y$ are the next 19 bits of the original message. If $x$ has more than 19 significant bits, then the end of the original message data has been reached.

The value of $x$ can be used to determine exactly how many of the bits of $y$ are part of the original message, and how many must be discarded. See § 9 for further details.

**Example**

The set of 12 terts that were calculated above, {0,0,-1,-1,-1,1,-1,-1,0,1,-1,0}, can be converted back into bits as follows.

| Number of tert | Value of tert | Value to be added to x | New value of x |
|---|---|---|---|
| | | | 0 |
| 0 | 0 | 0 | 0 |
| 1 | 0 | 0 | 0 |
| 2 | -1 | $2 \times 3^2 = 18$ | 18 |
| 3 | -1 | $2 \times 3^3 = 54$ | 72 |
| 4 | -1 | $2 \times 3^4 = 162$ | 234 |
| 5 | 1 | $3^5 = 243$ | 477 |
| 6 | -1 | $2 \times 36 = 1458$ | 1935 |
| 7 | -1 | $2 \times 37 = 4374$ | 6309 |
| 8 | 0 | 0 | 6309 |
| 9 | 1 | $3^9 = 19638$ | 25992 |
| 10 | -1 | $2 \times 3^{10} = 118098$ | 144090 |
| 11 | 0 | 0 | 144090 |

$x$ does not have more than 19 significant bits ($144090 < 2^{19}$) and in binary is represented by the 19 bits 0101101101001100010. These are the same 19 bits that were converted into ternary in the previous example.

**9. End of Message Marker**

A binary message is converted into ternary for the purpose of encoding (see § 8). This is performed using blocks of 19 bits. Clearly, not every message will have a length that is an exact multiple of 19 bits, so, if necessary, the last block of 19 bits will be padded out with random bits. These random bits are not part of the original message and must be removed when decoding. The encoded message must therefore include enough information to determine exactly which bits are part of the message and which must be disregarded.

Furthermore, the encoding mechanism operates on ternary polynomials with N coefficients, where N is an integer parameter determined by the key strength. The message, once converted into ternary digits, cannot be expected to fill an exact number of polynomials. As a consequence, it is probable that the last polynomial will also need to be padded out with random ternary digits. When the message is decoded, it must be possible to disregard these terts.

An end of message marker is added to the message, therefore, to tell the decoder exactly where the original data terminated.

It should be noted that the method for conversion of bits to terts will never generate a 12-tuple of ternary digits in the range {0,1,0,-1,1,0,-1,-1,1,-1,-1,-1} to {-1,-1,-1,-1,-1,-1,-1,-1,-1,-1,-1,-1}. The values in this range are all used as end of message markers.

As previously stated, the last block of the message is padded out to 19 bits if necessary, and then converted to 12 terts. Immediately following this block, another set of 12 terts is added to the message as an end marker. The end marker is calculated in the following fashion:

1. B should be assumed to be a random integer in the range 0-375, and A the number of the last message bit in the incomplete set of 19 bits.

2. $A + 19 \times B + 2^{19}$ is converted into 12 terts in exactly the same manner as sets of 19 bits have previously been converted. The resulting set of terts will be in the range {0,1,0,-1,1,0,-1,-1,1,-1,-1,-1} to {-1,-1,-1,-1,-1,-1,-1,-1,-1,-1,-1,-1}. This is the end of message marker. The remainder of the polynomial is then padded out with random terts.

Other calculations could of course be used to create the end of message marker, provided that the result is a series of terts that falls outside the possible space used to represent messages, and that one can determine, from the end of message marker, which is the last bit of the message. One way to do that is to divide the available end of message marker space up into 19 parts, and to select (eg at random, or substantially at random,) a marker from the appropriate part to indicate which of the last 19 bits represents the actual end of message.

The padding of the message block could be at the beginning or at the end of the block; and the end of message marker could be added to the front or to the end of the resultant block of terts. The direction within a block is more or less arbitrary, and hence expressions such as "followed by" can encompass "in front of' when the block is considered in reverse.

## Coding Example

For the purposes of this example, it is supposed that there are only 4 bits of the original message left to encode when the final block is reached. In this circumstance, 15 random bits are chosen and are concatenated with the 4 message bits. In other words, the $0^{th}$, $1^{st}$, $2^{nd}$, and $3^{rd}$ bits of this block of 19 belong to the original message and the $4^{th}$, ..., $18^{th}$ bits are just random padding. A is therefore set to be 3, since the $3^{rd}$ bit is the last bit that belongs to the original data. This padded set of 19 bits is then converted to terts as normal.

After this, an end of message marker is chosen. First a random B is chosen in the range 0-375. For the purposes of this example, B will be given a value of 122. The following calculation is then performed:

$$A + 19 \times B + 2^{19} = 3 + 19 \times 122 + 2^{19} = 526609.$$

The conversion of this integer into terts gives {1,0,0,1,0,1,-1,0,-1,-1,-1,-1}.

Note that this is greater than {0,1,0,-1,1,0,-1,-1,1,-1,-1,-1}, as can be clearly seen from the fact that in the former 12-tuple all four of the leading terts (those on the right) are set to -1, while in the latter 12-tuple the fourth tert is 1. {1,0,0,1,0,1,-1,0,-1,-1,-1,-1} is the required end marker.

When the message is decoded, each set of 12 terts in turn is converted back into 19 bits. If operating normally, the decoding process will eventually encounter a block of 12 terts that lie outside the range for conversion back into 19 bits. In other words, the integer obtained through conversion back into binary has more than 19 significant bits. (See § 8.)

This integer is the end of message marker. After this end of message marker has been converted back to binary, $2^{19}$ is subtracted from it. The result is divided by 19, and the remainder taken. This returns A. Of the 19 bits of the block immediately preceding the end marker, the sequence of bits starting with the $0^{th}$ up to and including the $A^{th}$ bit are kept as original message bits. The remaining bits are the random padding, which can be discarded along with any remaining terts.

## Decoding Example

For the purpose of this example, it should be supposed that the block of 12 terts calculated in the previous example, {1,0,0,1,0,1,-1,0,-1,-1,-1,-1}, has just been received during the decoding process. When these 12 terts are converted back to binary, the value 526609 is yielded. This is at least as large as $2^{19}$ (or in other words has more than 19 significant bits in its binary representation). Subtracting $2^{19}$ and taking the remainder on division by 19 gives the value 3. It is therefore concluded that the 0th, 1st, 2nd, and 3rd bits of the previous block of 19 bits are valid message bits. The other 15 bits can then be discarded.

It will of course be understood that the use of an end of message marker from within an unusable space for message-carrying is not restricted to the bit-to-tert example described above, nor of course is it limited to the specific example of 19 bits being converted to 12 terts. Other conversions involving a change of modulus could be used, provided that there exists some suitable inaccessible space.

### 10. Pseudo Random Number Generator

Tumbler provides two pseudo random number generating algorithms (only the second of which the present applicant considers to be protectable). Both algorithms utilise the SHA-1 to produce an unpredictable and randomly distributed bit stream based on an input seed.

It is important to remember that all Pseudo-random number generators (PRNGs) are intrinsically deterministic and the output generated will only ever be as unpredictable as the seed.

The first Tumbler algorithm, TSR (Tao SHA-1 Random), operates in a similar manner to many other commercially available hash-based cryptographic PRNGs. SHA1Random and MD5Random, provided by RSA, and Yarrow, from Counterpane, would fall into this category. The initial input is hashed, and this hash output is repeatedly re-hashed with a counter to produce the random bit stream. At any stage it is possible to add more input, which is hashed together with the current state.

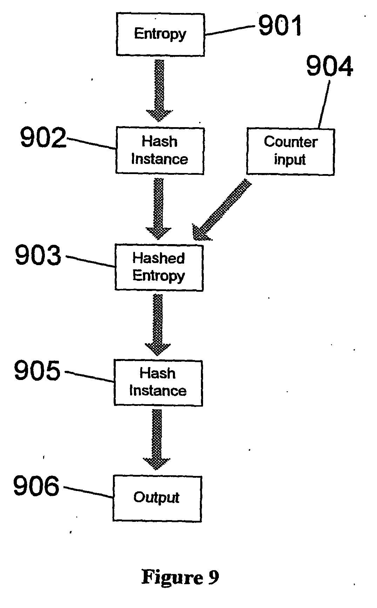

Figure 9 shows how a simplified version of how such a generic PRNG operates.

**901.** It is necessary to 'seed' a PRNG, or in other words to give it an initial state on which to base all subsequent output. Inputting data that is sufficiently unpredictable achieves this, though it may skew and therefore become unusable as pseudo random data. Such data is usually obtained by measuring real world events such as the timing of keystrokes or mouse movements. This data is called entropy.

**902.** A hash function is used to hash together an arbitrarily large quantity of entropy. This gives an internal state, of defined size, that is based on this entropy. The unpredictability of entropy might not be the same as its size. 10 bits of entropy may only have 16 possible collective values and will therefore have 4 bits of unpredictability. Using this hashing step one can enter enough entropy to guarantee sufficient unpredictability.

**903.** The output from **902**, together with the value of the counter in **904**, forms the internal state of the PRNG.

**904**. An internal counter is used to vary each block of output. The counter changes with each block of random output. Since each block of output is based on the counter this results in the production of different outputs.

**905.** Another hash instance combines the result of the first hash 903 with the counter 904. This hash is used again each time a new block of random data is required.

**906**. The result of the hash in **905** is the pseudo random data. Depending upon the application this may (but need not) be a string of pseudo-random bits.

A precise description of TSR follows:

H() is defined to be the hash function; X‖Y to be the concatenation of X and Y; C to be the integer counter; $E_i$ to be the $i$th pool of entropy that is added to the Random Number Generator; $P_{ij}$ to be the $j$th 106-bit pool of random data that has been generated since the input of $E_i$ and $S_i$ to be the 160-bit internal state that creates $P_{ij}$.

- When the algorithm is first initialised, the counter C, $i$ and $j$ are set to zero and the state, So, has all 160 bits unset.

- When the $i$th pool of entropy is inputted into the PRNG, supposing that the current state is $S_{(i-1)}$, then the new state, $S_i$, becomes $H(S_{(i-1)}\|E_i)$.

- When more data is required the counter C is incremented by one and the new pool $P_{ij}$ becomes $H(S_i\|C)$.

This method acts as a secure mechanism for producing an indefinite cryptographic bit stream from entropy input, but has the disadvantage of only possessing an internal state the size of one hash output. SHA-1 has the largest digest size of any commonly supported hash algorithm at present, with 160 bits. This means that regardless of the quantity of entropy input, there cannot be more than $2^{160}$ distinct bit streams produced between input operations.

In modem cryptography it is often desirable for an object (such as a private key) to be chosen randomly out of an extremely large space. For example, for N = 503, there are $2^{720}$ possible NTRU PKCS private keys. If one used a PRNG with an internal state of $2^{160}$, with only one seeding operation, then at least $2^{520}$ of the possible keys could never be selected.

Performing seeding operations during the creation of an object is not always a trivial task. A seeding operation requires entropy, and entropy is obtained through measuring the real world. It is therefore necessary for one to know exactly how the platform on which the cipher is being used interacts with the real world.

We propose two solutions to the problem of achieving sufficiently random data in a platform independent manner.

The first is a self re-seeding PRNG. This method is fairly simple to explain, but places an extra requirement on the system in which it is employed and as such is only semi-platform independent.

The basic internal mechanism of the PRNG remains unchanged. For each platform on which the PRNG is expected to operate, a function exists that can be called by the PRNG and which will provide the PRNG with entropy.

The PRNG produces random data as normal, but records the quantity of data produced. This is compared with the internal state of the PRNG, as well as the unpredictability of the entropy that was last provided. When the PRNG has produced as much data as the smaller out of the internal state and the unpredictability of the entropy, then it calls the platform specific function and requests more entropy.

The second solution is more complicated, but has the advantage of being completely platform independent.

The basic principle involves the use of a PRNG with a very large internal state. The problem in producing such a PRNG lies in making it cryptographically secure when secure hashes have a finite output that is much smaller than the internal state required.

Tumbler's implementation of a large state PRNG is the TSR-LS (Tao SHA-1 Random - Large State) algorithm (this being the second of the two Tumbler algorithms mentioned above). TSR-LS uses multiple simultaneous hash functions, and rehashes the original seed with each new generation operation. This gives it an internal state of 2048 bits, so that there are $2^{2048}$ distinct bit streams that can be generated between two input operations. TSR-LS is slower than TSR, but not as slow as a dynamically re-seeding PRNG. Another advantage of TSR-LS over a dynamically re-seeding PRNG is that the latter will use seed data piecemeal, so the initial output will not be dependent on some of the seed. With TSR-LS, all of the output is dependent on all of the seed; any difference in the 2048-bit state has the potential to alter every bit of the output.

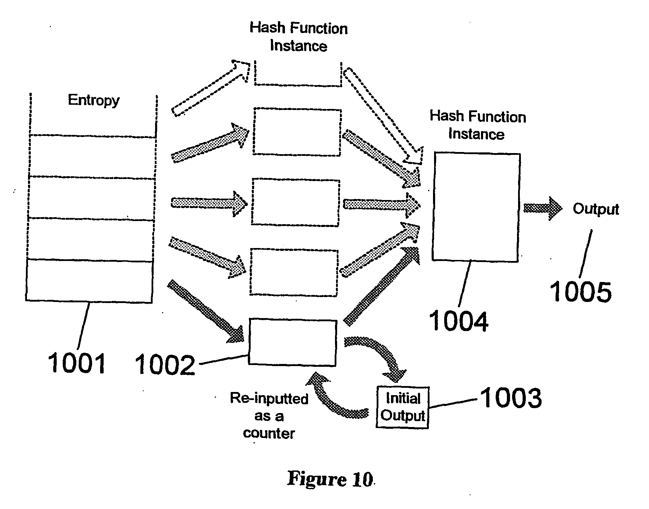

TSR-LS uses a system of multiple tiered hash functions. A simplified version is depicted in figure 10. The hash functions could be embodied in software or, alternatively, they could comprise hardware hashing means.

**1001.** The entropy is divided equally between each of the hash functions in the first tier. The number of hash functions depends of the size of the internal state that one requires. The seeding process will be slower the more hash functions one uses, but on going operation times are independent of the number of hashes.

**1002.** To begin with, each of the hash functions in the first tier hashes the entropy that it receives.

**1004.** The second tier's hash takes in the output from all of the hashes 1002 in the first tier and hashes all of this together. This ensures that every bit of the final output is based on every bit of the initial seed.

**1005.** The output from the second tier hash 1004 forms the pseudo random output for the PRNG.

Each time more data is requested, from the application that is using the PRNG, one of the hash functions 1002 (on a rotation basis) performs a rehashing operation using a counter 1003. This rehashing operation could be the same as that used by the normal state PRNG described above.

**1003.** This counter is used to ensure that each hash function produces new output with every rehashing operation. Here, and in the example below, the initial output is used as the counter increment. Each hash function 1002 may maintain its own counter 1003.

The re-hashed output of the particular re-hashing function is then fed to the second-tier function 1004, which hashes it with the output it has previously received from the other functions 1002, to create the required new output data 1005. In this way, only one of the functions 1002 needs to re-hash and pass data to the second-tier function 1004 when a request for new data is made.

The hash functions 1002 obtain additional entropy from the pool 1001 as and when they need it. Alternatively, additional entropy may be supplied en block to all the functions 1002 at once.

A precise description of TSR-LS follows:

TSR-LS makes use of five concurrent instances of a SHA-1 hash object. HO, $H_0()$, $H_1()$, $H_2()$, $H_3()$ are defined to be these hash functions; X∥Y as for TRS above; $C_0$, $C_1$, $C_2$ and $C_3$ to be four 160-bit counters; $I_0$, $I_1$, $I_2$ and $I_3$ to be four 160-bit increments; $E_i$ to be the $i^{th}$ pool of entropy added to the Random Number Generator; $E_{i0}$, $E_{i1}$, $E_{i2}$, $E_{i3}$ to be four sub-pools of entropy for each entropy pool $E_i$; $P_{ij}$ to be the $j^{th}$ 106-bit pool of random data generated since the input of $E_i$; and $S_k$ to be the $k^{th}$ 160-bit intermediate state generated.

- When the algorithm is first initialised, $C_0$, $C_1$, $C_2$, $C_3$, $I_0$, $I_1$, $I_2$ and $I_3$ have all 160 bits unset, $i$ = 0 and k = -1.

- When the $i^{th}$ pool of entropy is inputted into the PRNG, the entropy pool $E_i$ is divided so that the nth byte is placed in the entropy sub-pool $E_{ia}$ where $a$ is the lowest positive residue of n modulo 4, unless the byte is part of a last, incomplete set of 4, in which case the bits of this last set of bytes are divided so that the *n*th bit is included in the entropy sub-pool $E_{ia}$ where a is the lowest positive residue of *n* modulo 4. The ,last internal state block created should be defined as $S_k$. For each of the hash functions $H_a()$, a sub-pool of entropy is concatenated with all of the previous data entered into that hash. The digest for this concatenation is computed, and the result placed in $S_{k+a+1}$.

- When more data is required, *a* should be taken to be the least positive residue of *j* modulo 4. $C_a$ is incremented with the increment $I_a$, by adding this value modulo $2^{160}$. Next, this value is concatenated to the input that was previously hashed by $H_a()$, and the result is computed. It should be assumed that the last internal state block created was $S_k$. In this case, the result of this hash is placed in $S_{k+1}$, and the new pool $P_{ij}$ becomes $H(S_0\|S_1\|...\|S_{k+1})$.

## 11. Sequence Generator

The sequence generator is used for the MTA protection hash as explained above. The purpose of this generator is to provide an indefinite stream of pseudo random bits in a similar manner to a PRNG, except that the input seed is known and the stream must be deterministic. It must still be computationally unfeasible to find an input seed that will generate an arbitrarily chosen sequence, or to calculate the input from any part of the output.

Since PRNGs are deterministic, a sequence generator can be achieved by supplying a known seed to a specified PRNG. In Tumbler a simple sequence generator is supplied that operates slightly differently from the PRNG (although a PRNG could be used).

The initial seed is hashed using an instance of the SHA-1, and this hash output is itself used as the first 20 bytes of available sequence data. After that, new sequence data is provided by concatenating the previous output block with the hash input and re-computing the hash.

## 12. Efficient Modulo Arithmetic through the Use of Parallel Bit Operations on a Vector Representation

Tumbler makes use of a new method of performing modulo arithmetic in small moduli using bit based technology.

This method allows one to use a bit (ie binary) based device to perform modulo arithmetic efficiently. This is achieved by storing numbers in a vector form and performing arithmetical operations on multiple numbers in parallel, using a simple sequence of bitwise logical operations. One can use this to perform efficient modulo arithmetic in any base. However, the efficiency is greatest in small bases. Tumbler uses this method for performing PKCS ternary operations.

### 12.1 A More Detailed Description of Modulo Arithmetic

Arithmetic modulo *r*, for some positive integer base r, concerns operations between the *r* 'residue classes' of integers. A 'residue class' consists of those integers that share a common remainder when divided by r.

For instance, in modulo 7, 64 and 15 both reside in the same residue class:

$$64 = 9 \times 7 + 1, \ 15 = 2 \times 7 + 1.$$

The remainder on dividing the sum or product of two integers by any given integer is dependent only on the remainder on dividing the respective addends or factors by that same integer. Therefore, it is possible to consider operations between residue classes.

Addition, subtraction and multiplication between residue classes work in the same way as for normal integer arithmetic between any chosen representatives from the residue classes. Usually the former involves choosing a set of representatives, one from each residue class. These would normally be either the set with smallest positive value (i.e. {0, 1, ..., *r*-1}, or the set with the lowest absolute value {[-*r*/2]+1, ..., 0, ..., [*r*/2]}.

Modulo arithmetic is theoretically much simpler than generalised integer arithmetic. However, modem digital devices are built to cope with generalised integer arithmetic in such a way as to make them very inefficient at performing modulo arithmetic.

### 12.2 Machine Assumptions

Henceforth it is assumed that there exists a device which uses *n*-bit words and is capable of performing the following bitwise logical operations:

- The binary operation **XOR** defined to return a word each bit of which is set if and only if the corresponding bits of both input words are neither both set, nor both clear.

- The binary operation **AND** defined to return a word each bit of which is set if and only if the corresponding bits of both input words are set.

- The binary operation **OR** defined to return a word each bit of which is set if and only if the corresponding bits of either, or both, input words are set.

- The unary operation **NOT** defined to return a word each bit of which is set if and only if the corresponding bit of the input word is clear.

### 12.3 Vector Representation

The crux of the method described here lies in the vector bitwise representation of numbers.

Digital devices will normally store integers in binary form in the adjacent bits of one word. This is to permit the use of circuits such as 'half adders,' which allow for carry between bits. With a vector representation the value of a number is represented by bits located in corresponding locations within different words. The value of these bits need not relate to the binary form of the number. Interpreting the bits in a novel way, as illustrated with ternary numbers in the later example, may lead to greater efficiency as well as other incidental benefits.

Performing a single modulo arithmetic operation between two integers is considerably less efficient using vector representation than using normal integer methods. This is because combining the $2 \times \lceil \log_2 r \rceil$ words representing the numbers will generally involve $O(\log_3 r)$ operations.

The applicant has realised, however, that the advantage of a vector representation lies in its indefinite parallelisability. The number of identical operations that may be performed concurrently is limited only by the word size.

### 12.4 Ternary Representation

Henceforth it is assumed that the three possible values of a tert (representations of a ternary number) are zero, one and minus one. This is an arbitrary decision and the system applies independent of the names of the three terts.

The terts are represented by two bits occupying corresponding locations in two distinct words. The bit located in the first word is set if and only if the value of the tert is not zero. The bit located in the second word is set if and only if the value of the tert is one. Hence the three terts 0, 1 and -1 are represented by the vectors <0,0>, <1,1> and <1,0>, respectively. In this manner $n$ terts may be represented in two n-bit words.

**Example**

Let us assume that we wish to use vector bitwise representations of the four terts 0, 0, -1 and 1. Using the vectors specified above gives us the following table:

| Tert | Vector 1st bit | Vector 2nd bit |
|------|----------------|----------------|
| 0 | 0 | 0 |
| 0 | 0 | 0 |
| -1 | 1 | 0 |
| 1 | 1 | 1 |

Now, taking and storing separately the 1st bits and the 2nd bits allows us to treat this information as two separate 4-bit words, namely 0011 (representing the 1st bits), and 0001 (representing the 2nd bits). We may then carry out modulo arithmetic not on the individual terts, nor on the vectors, but on the words themselves, for example using the operations XOR, AND, OR and NOT. This avoids us having to deal with overflows or carries however many terts are being worked on simultaneously.

Apart from suggesting an efficient method of performing modulo arithmetic, this interpretation of the bits allows one to determine the value of a tert modulo 2 simply by examining the first array. Since algorithms are often concerned with distinguishing zero and non-zero terts this has a great advantage over the usual binary form.

Where there is a pair of corresponding bits, and the bit located in the first word is clear, the bit located in the second word is never set. However, the system need not rely on this.

Similar principles could of course apply to modulo arithmetic on bases other than 3 - for example to carry out arithmetic in base 5 one would operate on three separate words, the first representing all the first bits in the vector representation, the second all the second bits and the third all the third bits. The approach would work for higher bases as well.

## 12.5 Modulo Three Arithmetic

Modulo three arithmetic is performed in the following manner.

$X_{\sim 0}$ and $X_1$ are the two n-bit words representing the n terts $x_0, ..., x_{n-1}$, where the word $X_{\sim 0}$ contains the bits set if the corresponding tert is not zero and the word $X_1$ contains the bits set if the corresponding tert is one. Similarly $Y_{\sim 0}$ and $Y_1$ are the two n-bit words representing the n terts $y_0, ..., y_{n-1}$.

The result of adding the n pairs of terts $(x_i, y_i)$, each modulo 3, for $i = 0$ to $(n\text{-}1)$, to produce $Z_{\sim 0}$ and $Z_1$ which represent the terts $x_0 + y_0$ (mod 3), ..., $x_{n-1} + y_{n-1}$ (mod 3), can then be calculated as follows:

$$Z_1 \quad = \quad (X_{\sim 0} \text{ XOR } Y_1) \text{ AND } (X_1 \text{ XOR } Y_{\sim 0}),$$

$$Z_{\sim 0} \quad = \quad (X_{\sim 0} \text{ XOR } Y_{\sim 0}) \text{ OR } (X_1 \text{ AND } Y_1) \text{ OR } Z_1.$$

The result of subtracting from $x_i$, the value of $y_i$, each modulo 3, for $i = 0$ to $(n\text{-}1)$, to produce $Z_{\sim 0}$ and $Z_1$ which represent the terts $x_0 - y_0$ (mod 3), ..., $x_{n-1}\ y_{n-1}$ (mod 3), can be calculated as follows:

$$Z_{\sim 0} \quad = \quad (X_{\sim 0} \text{ XOR } Y_{\sim 0}) \text{ OR } (X_1 \text{ XOR } Y_1),$$

$$Z_1 \quad = \quad (Y_{\sim 0} \text{ XOR } X_1) \text{ AND } ((\text{NOT } Y_1) \text{ OR } X_{\sim 0}) \text{ AND } Z_{\sim 0}.$$

The result of multiplying the n pairs of terts $(x_i, y_i)$, each modulo three, for $i = 0$ to $(n\text{-}1)$, to produce $Z_{\sim 0}$ and $Z_1$ which represent the terts $x_0 \times y_0$ (mod 3), ..., $x_{n-1} \times y_{n-1}$ (mod 3), can be calculated as follows:

$$Z_{\sim 0} \quad = \quad (X_{\sim 0} \text{ AND } Y_{\sim 0}),$$

$$Z_1 \quad = \quad (\text{NOT } (X_1 \text{ XOR } Y_1)) \text{ AND } Z_{\sim 0}.$$

In the field $F_3$, the only two non-zero elements, 1 and -1, are both self-inverting. Hence division is indistinguishable from multiplication.

## 12.6 Hardware and Software

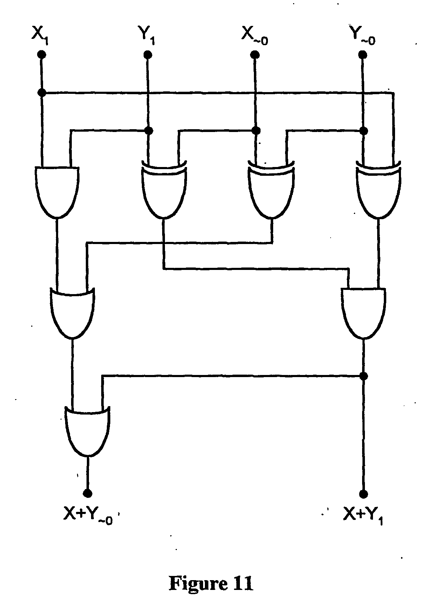

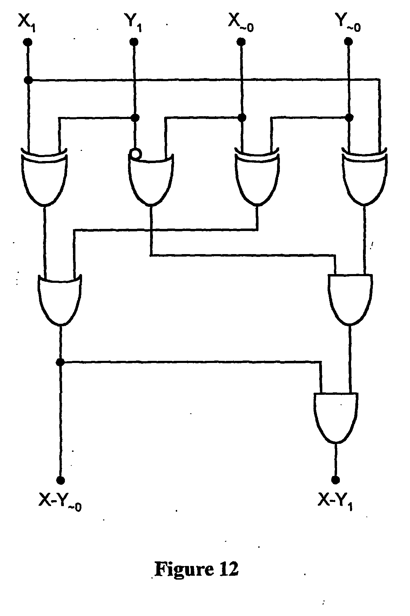

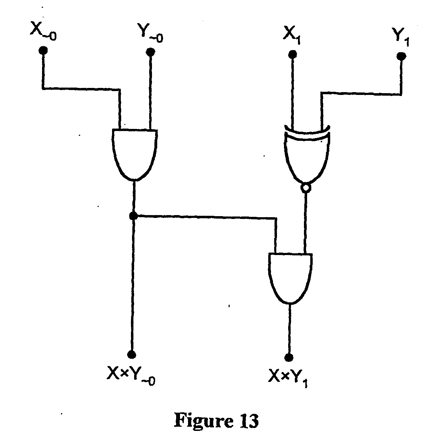

This method is simple to implement in hardware, as illustrated by the circuit diagrams shown in figures 11, 12 and 13. Figure 11 shows a circuit diagram for addition modulo 3, figure 12 shows a circuit diagram for subtraction modulo 3 and figure 13 shows a circuit diagram for multiplication modulo 3.

In software, this method allows for scalable parallelisation, since one is able to take advantage of the full width of a word of any length.

**12.7 Use in Tumbler**

The Tumbler PKCS uses modulo 3 polynomials, that is polynomials whose coefficients all have values that are only significant modulo 3. At various stages in the algorithm it is necessary to add and subtract these polynomial from one another. Specifically, the current implementation of the key creation system uses the 'Almost Inverse algorithm' (see § 3) or alternatively the Euclidean Algorithm, performed on modulo 3 polynomials. These algorithms in turn require the addition and subtraction of polynomials. The decryption system requires the convolution product (star-multiplication) of two modulo 3 polynomials. The star-multiplication algorithm also uses the addition and subtraction of polynomials.

To add two polynomials one adds together the values of the corresponding coefficients from each of the polynomials. The value of the first coefficient from the first polynomial is added to the value of the first coefficient of the second polynomial to produce the value of the first coefficient of the sum, and so on.

If the first polynomial is represented as the two bit arrays $X_1$ and $X_{\sim 0}$ as described above, and the second polynomial is represented as the two bit arrays $Y_1$ and $Y_{\sim 0}$, then the polynomial sum of the two polynomials can be calculated by performing the following modulo 3 addition operations on the four arrays.

$$Z_1 \quad = \quad (X_{\sim 0} \text{ XOR } Y_1) \text{ AND } (X_1 \text{ XOR } Y_{\sim 0}),$$

$$Z_{\sim 0} \quad = \quad (X_{\sim 0} \text{ XOR } Y_{\sim 0}) \text{ OR } (X_1 \text{ AND } Y_1) \text{ OR } Z_1.$$

The same is true of subtraction. Storing each polynomial as two bit arrays allows the above subtraction method to be used to calculate the difference of the two polynomials.

Since each polynomial in Tumbler can have as many as 503 coefficients this method produces a considerable increase in speed.

This approach to modular arithmetic may find application in the field of digital data processing generally, and is not restricted to use within cryptosystems.

**Claims**

1. A method of validating an encrypted message comprising:

   a) representing the message as a message polynomial;
   b) encrypting the message polynomial to form a cipher polynomial;
   c) hashing together inputs representative of the message polynomial
   and the cipher polynomial to create a hash output; and
   d) transmitting to a recipient both an encrypted message defined by the cipher polynomial and check information based on the hash output.

2. A method of validating an encrypted message as claimed in Claim 1 in which the inputs are concatenated before being hashed.

3. A method of validating an encrypted message as claimed in Claim 1 in which the message polynomial input comprises bits representative of polynomial coefficients which have been packed to fill bytes.

4. A method of validating an encrypted message as claimed in Claim 1 in which the cipher polynomial input comprises bits representative of polynomial coefficients which have been packed to fill bytes.

5. A method of validating an encrypted message as claimed in any one of Claims 1 to 4 in which the hashing is carried out using the SHA-1 algorithm.

6. A method of validating an encrypted message as claimed in any one of Claims 1 to 5 including confirming validation of the transmitted encrypted message by comparing an expected hash output derived from the check information with a re-calculated hash output based on the received cipher polynomial and the decoded message polynomial.

7. A computer program which when run on a computer carries out the method steps as claimed in any one of Claims 1 to 6.

8. A computer readable medium carrying a computer program as claimed in Claim 7.

9. A datastream representative of a computer program as claimed in Claim 7.

**Patentansprüche**

1. Verfahren zur Validierung einer verschlüsselten Nachricht, welches Folgendes aufweist:

   (a) Darstellen der Nachricht als ein Nachrichtenpolynom;
   (b) Verschlüssen des Nachrichtenpolynoms, um ein Chiffrierpolynom zu bilden;
   (c) Zusammen-Hashen von Eingaben, die für das Nachrichtenpolynom und das Chiffrierpolynom repräsentativ sind, um eine Hash-Ausgabe zu erstellen; und
   (d) Übertragen einer verschlüsselten Nachricht, die durch das Chiffrierpolynom definiert wird, an einen Empfänger und Überprüfen von Informationen auf der Grundlage der Hash-Ausgabe.

2. Verfahren zur Validierung einer verschlüsselten Nachricht nach Anspruch 1, in dem die Eingaben vor ihrem Hashing verkettet werden.

3. Verfahren zur Validierung einer verschlüsselten Nachricht nach Anspruch 1, in dem die Nachrichtenpolynom-Eingabe Bits enthält, die für polynomische Koeffizienten repräsentativ sind, die gepackt wurden, um Bytes zu füllen.

4. Verfahren zur Validierung einer verschlüsselten Nachricht nach Anspruch 1, in dem die Chiffrierpolynom-Eingabe Bits enthält, die für polynomische Koeffizienten repräsentativ sind, die gepackt wurden, um Bytes zu füllen.

5. Verfahren zur Validierung einer verschlüsselten Nachricht nach einem der Ansprüche 1 bis 4, in dem das Hashing mit Hilfe des SHA-1-Algorithmus erfolgt.

6. Verfahren zur Validierung einer verschlüsselten Nachricht nach einem der Ansprüche 1 bis 5, wobei das Verfahren das Bestätigen der Validierung der übertragenen verschlüsselten Nachricht aufweist, indem eine erwartete Hash-Ausgabe, die aus der Überprüfungsinformation abgeleitet wird, mit einer neu berechneten Hash-Ausgabe auf der Grundlage des empfangenen Chiffrierpolynoms und des decodierten Nachrichtenpolynoms verglichen wird.

7. Computerprogramm, welches - wenn es auf einem Computer läuft - die Verfahrensschritte nach einem der Ansprüche 1 bis 6 ausführt.

8. Computerlesbares Medium, das ein Computerprogramm nach Anspruch 7 trägt.

9. Datenstrom, der für ein Computerprogramm nach Anspruch 7 repräsentativ ist.

**Revendications**

1. Procédé de validation d'un message crypté, comprenant :

   a) la représentation du message sous forme d'un polynôme de message ;
   b) le cryptage du polynôme de message pour former un polynôme de chiffrement ;
   c) le hachage les unes avec les autres d'entrées représentatives du polynôme de message et du polynôme de chiffrement pour créer une sortie de hachage ; et
   d) la transmission à un destinataire d'un message crypté défini par le polynôme de chiffrement et d'informations de contrôle basées sur la sortie de hachage.

2. Procédé de validation d'un message crypté selon la revendication 1, **caractérisé en ce que** les entrées sont concaténées avant d'être hachées.

**3.** Procédé de validation d'un message crypté selon la revendication 1, **caractérisé en ce que** le polynôme de message fourni en entrée comprend des bits représentatifs de coefficients polynomiaux qui ont été condensés en octets de remplissage.

**4.** Procédé de validation d'un message crypté selon la revendication 1, **caractérisé en ce que** le polynôme de chiffrement fourni en entrée comprend des bits représentatifs de coefficients polynomiaux qui ont été condensés en octets de remplissage.

**5.** Procédé de validation d'un message crypté selon l'une quelconque des revendications 1 à 4, **caractérisé en ce que** le hachage est effectué en utilisant l'algorithme SHA-1.

**6.** Procédé de validation d'un message crypté selon l'une quelconque des revendications 1 à 5, comprenant la confirmation de la validation du message crypté transmis en comparant une sortie de hachage attendue déduite des informations de contrôle à une sortie de hachage recalculée basée sur le polynôme de chiffrement reçu et sur le polynôme de message décodé.

**7.** Programme informatique qui, lorsqu'il est exécuté sur un ordinateur, met en oeuvre les étapes du procédé selon l'une quelconque des revendications 1 à 6.

**8.** Support lisible par ordinateur portant un programme informatique selon la revendication 7.

**9.** Flux de données représentatif d'un programme informatique selon la revendication 7.

101 — Choose integer parameters
N,q

102 — Choose random polynomial f

103 — Apply almost inverse algorithm to compute inverse of f mod 3, $F_3$    $F_3$ doesn't exist

$F_3$ exists

104 — Apply almost inverse algorithm to compute inverse of f mod 2, $F_2$    $F_2$ doesn't exist

$F_2$ exists

105 — Use bootstrapping algorithm to compute $F_q$ from $F_2$

106 — Choose random polynomial g

107 — Compute public key as $h \equiv 3F_q{}^*g \,(\text{mod } q)$

108 — Retain private key f, $F_3$

109 — Publish public key

**Figure 1**

**201** — Plaintext bytes P.
Public key polynomial H.
Algorithm parameters $N,q$.
MTA key length $k$.

**202** — Choose $k$ bytes of random MTA key K.
Use K to seed sequence generator S.
Counter $i = 0$.

**203** — Create message polynomial $m_i$ from the next $N$ terts of $K||(S(K) XOR P)$.

**204** — Enough terts to fill $m_i$?

**206** — Increment $i$.

NO

YES

**207** — Complete the last set of 12 terts, if necessary, with random bits.
Concatenate appropriate end marker, X, onto incomplete $m_i$ (possibly rolling into $m_{i+1}$).
Fill last incomplete polynomial with random terts.

**205** — Choose random polynomial, $\phi_i$.
Compute encrypted polynomial $e_i$
$= m_i + 3h * \phi_i \pmod{q}$.
Compute check block $B_i$
$= H(e_i||m_i)$, for SHA-1 instance H.

**208** — Choose random polynomial $\phi_i$ (and possibly $\phi_{i+1}$).
Compute encrypted polynomial $e_i$ (and possibly $e_{i+1}$).
Compute check block $B_i$ (and possibly $B_{i+1}$).

**209** — Transmit encrypted message
$e_0||B_0||e_1||B_1||...||e_{final}||B_{final}$.

**Figure 2**

**Figure 3**

**401** — Passed $e_i$, $F_3$, $N$, $q$, $a_i$, $B_i$ correction level. Also uses hash instance H and table $G_{jk}$.

**402** — Corrected level = 1.
$j = 1$.
$x = q$ rem3.
centre $a_i$ modulo $q$.

**403** — Create a list, L, containing indices and values of coefficients ordered from greatest to least absolute value.

**404** — reduced $a_i$ modulo 3.

**405** — $k = 1$.

**406** — $d = G_{j-1,k}$ or 0 if $j=1$.

**411** — STOP. Correction successful.

**410** — Does $B_i = H(e_i||b_i)$?  YES → **411** / NO → **407**

**409** — $b_i = F_3 * a_i'$ (mod 3).

**408** — Using the list L choose a new $k$-tuple of coefficients whose values lie in the range $q/2$ to $q/2$-d or $-q/2$+d to $-q/2$ inclusive. Add or subtract $x$ mod 3 from each member of the $k$-tuple in $a_i$ based on whether the member's value is negative or positive respectively. Call this modified polynomial $a_i'$.

**407** — Have all possible $k$-tuples been checked for current $j$ and $d$?  NO → **408** / YES → **413**

**413** — Is $d \geq G_{jk}$?  NO → **412** / YES → **414**

**412** — increment $d$.

**414** — increment corrected level.

**415 / 416** — Is corrected level > correction level?  NO → **417** / YES → **416**

**416** — STOP. Correction unsuccessful.

**417** — increment $k$.

**418** — Is $G_{jk} = 0$?  YES → **419** / NO → **406**

**419** — increment $j$.

**Figure 4**

Figure 5

Figure 6

Figure 7

**Figure 8**

**Figure 9**

Hash Function
Instance

Entropy

Hash Function
Instance

Output

**1005**

**1004**

**1001** **1002**

Re-inputted
as a
counter

Initial
Output

**1003**

**Figure 10**

Figure 11

Figure 12

**Figure 13**